(19)

(11) **EP 3 815 929 B1**

(12) **EUROPÄISCHE PATENTSCHRIFT**

(45) Veröffentlichungstag und Bekanntmachung des Hinweises auf die Patenterteilung:
**11.01.2023 Patentblatt 2023/02**

(21) Anmeldenummer: **20196954.0**

(22) Anmeldetag: **18.09.2020**

(51) Internationale Patentklassifikation (IPC):
***B60C 11/16*** *(2006.01)* ***B60C 11/03*** *(2006.01)*

(52) Gemeinsame Patentklassifikation (CPC):
**B60C 11/16; B60C 11/032**

(54) **FAHRZEUGLUFTREIFEN UND SPIKES**

PNEUMATIC VEHICLE TYRE AND SPIKES

PNEUMATIQUE DE VÉHICULE ET DES CLOUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.10.2019 DE 102019216539**

(43) Veröffentlichungstag der Anmeldung:
**05.05.2021 Patentblatt 2021/18**

(73) Patentinhaber: **Continental Reifen Deutschland GmbH**
**30165 Hannover (DE)**

(72) Erfinder: **Kendziorra, Norbert**
**30419 Hannover (DE)**

(74) Vertreter: **Continental Corporation**
**c/o Continental AG**
**Intellectual Property**
**Postfach 169**
**30001 Hannover (DE)**

(56) Entgegenhaltungen:
**EP-A1- 3 095 619 EP-A1- 3 363 657**
**DE-A1- 2 305 558**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 815 929 B1

## Beschreibung

Die Erfindung betrifft eine Kombination aus einem Fahrzeugluftreifen und Spikes, wobei der Fahrzeugluftreifen einen Laufstreifen mit Profilelementen mit jeweils zumindest einem Spikeloch mit einem Spikelochvolumen $V_{Spikeloch}$ zum Einsetzen eines Spikes mit einem Spikekörper mit einem Spikekörpervolumen $V_{Spikekörper}$ aufweist, wobei das Spikekörpervolumen $V_{Spikekörper}$ größer ist als das Spikelochvolumen $V_{Spikeloch}$, wobei das Spikeloch vom Zentrum einer an der Außenfläche des Profilelementes ausgebildeten, muldenförmigen Vertiefung ausgeht.

Es ist bekannt, Laufstreifen von Fahrzeugluftreifen mit Spikes zu versehen, um unter winterlichen Fahrbedingungen die Kraftübertragung des Reifens auf schnee- und/oder eisbedeckten Fahrbahnen zu erhöhen. Die Spikes werden dabei in Spikelöcher eingesetzt, welche im Zuge der Vulkanisation des Reifens mittels Moldpins am Laufstreifen ausgeformt wurden. Fahrzeugluftreifen der eingangs genannter Art sind daher in unterschiedlichen Ausführungen weit verbreitet und allgemein bekannt.

Eine Kombination der eingangs genannten Art ist beispielsweise aus der EP 3 363 657 A1 bekannt. Bei der offenbarten Kombination aus einem Fahrzeugluftreifen und Spikes weist der Laufstreifen des Fahrzeugluftreifens Profilelemente mit Spikelöchern auf, welche sich in radialer Richtung aus einem muldenförmigen, radial äußeren Abschnitt, einem in radialer Richtung verlaufenden, mittleren Abschnitt und einem im Querschnitt im Wesentlichen birnenförmigen, radial inneren Abschnitt zusammensetzt. Bei einem solchen Reifen soll sich bei der nach der Vulkanisation stattfindenden Entnahme des Reifens aus der Vulkanisationsform der mit der Form des Spikeloches korrespondiere Moldpin aus dem Spikeloch gut herausziehen lassen. Ferner sollen die Spikelöcher einen guten Spikesitz ermöglichen.

Aus der DE 2 305 558 A1 ist ein mit Spikes versehener Fahrzeugluftreifen bekannt, wobei die Spikes derart in am Laufstreifen ausgebildeten Vertiefungen positioniert sind, dass diese nicht bis zur Laufstreifenperipherie reichen. Radial innerhalb der Spikes sind Gummioder Kunststoffzylinder ausgebildet, welche durch Erhöhung des Reifendruckes radial nach außen schiebbar sind, sodass die Spikes aus- und einfahrbar sind.

Aus der DE 10 2017 207 316 A1 ist beispielsweise ein Fahrzeugluftreifen mit Spikes bekannt, die jeweils von einer in Draufsicht ringförmigen, im Laufstreifen ausgebildeten Vertiefung umlaufen sind, welche bei der Vulkanisation jeweils von einem Bestandteil des das jeweilige Spikeloch ausformenden Moldpins mitgebildet werden und als Reservoire zur Aufnahme von Eisspänen dienen sollen, die beim Kratzen der Spikepins auf eisigem Untergrund entstehen.

Üblicherweise ist die Gestalt der Spikelöcher und der Spikes derart aufeinander abgestimmt, dass die Spikekörper der Spikes vorrangig durch Presspassung in den Spikelöchern gehalten werden. Die Spikekörper weisen daher ein Volumen aus, dass jenes der Spikelöcher deutlich übersteigt. Beim Einsetzen des Spikes wird dabei das Gummimaterial des Laufstreifens rund um den Spike radial nach außen gedrückt, wodurch sich die an der Laufstreifenperiphere liegende Außenfläche des jeweiligen Profilelementes rund um den Spike etwas nach außen wölbt. Diese Wölbung reduziert die Kontaktfläche des Laufstreifens bzw. den Kontaktdruck zwischen dem Laufstreifen und der Fahrbahn, wodurch die Eisperformance des Reifens beeinträchtigt wird.

Der Erfindung liegt daher die Aufgabe zugrunde, eine Kombination der eingangs genannten Art bereitzustellen, bei welcher die Spikes im eingesetzten Zustand keine oder kaum obige Auswirkungen auf die Kontaktfläche bzw. den Kontaktdruck zwischen dem Laufstreifen und der Fahrbahn haben.

Gelöst wird die gestellte Aufgabe erfindungsgemäß durch eine Kombination, bei welcher die muldenförmige Vertiefung knickfrei zur Außenfläche ausläuft und ein Vertiefungsvolumen $V_{Vertiefung}$ aufweist, für welches gilt:

$$V_{Vertiefung} = (V_{Spikekörper} - V_{Spikeloch}) * f,$$

mit f: Faktor, wobei f = 0,9 bis 1,1 ist.

Erfindungsgemäß ist um die Spikelöcher daher jeweils eine muldenförmige Vertiefung ausgebildet. Wird ein Spike in eines der Spikelöcher eingesetzt, nimmt das dabei verdrängte Gummimaterial des jeweiligen Profilelementes zumindest im Wesentlichen das Volumen der Vertiefung ein, sodass die Vertiefung zumindest weitgehend verschwindet. Eine Auswölbung des Gummimateriales rund um den Spike wird vermieden, wodurch in diesem Bereich die erwünschte Kontaktfläche des Laufstreifens erhalten bleibt.

Das Volumen der Vertiefung ist besonders gut an das vom Spike verdrängte Gummivolumen angepasst, wenn gemäß einer bevorzugten Ausführung der Faktor f 0,95 - 1,05 beträgt.

Weitere bevorzugte Ausgestaltungen sorgen dafür, dass sich nach dem Einsetzen des Spikes in das Spikeloch eine gleichmäßige Kontaktfläche an der Profilelementaußenseite einstellt.

Bei einer dieser bevorzugten Maßnahmen sind das Spikeloch und die Vertiefungen bezüglich einer gemeinsamen, in radialer Richtung verlaufenden Hauptachse rotationssymmetrisch ausgeführt. Bevorzugter Weise ist daher die Vertiefung in Draufsicht kreisförmig gestaltet.

Für eine besonders gleichmäßige Außenfläche des jeweiligen Profilelementes ist es ferner von besonderem Vorteil, wenn die Vertiefung einen umlaufenden gerundeten, insbesondere kreisringförmigen Randbereich und einen an diesen knickfrei anschließenden, eine Mulde bildenden, vorzugsweise in der Gestalt einer Kugelkappe ausgeführten Boden aufweist.

Darüber hinaus ist es vorteilhaft, wenn die Vertiefung seicht ausgeführt ist und daher an ihrer tiefsten Stelle eine zwischen der Laufstreifenperipherie und dem Spikeloch ermittelte Tiefe von 0,5 mm bis 1,0 mm aufweist. An der Laufstreifenperipherie besitzt die Vertiefung bevorzugt einen Durchmesser von 11,0 mm bis 18,0 mm, insbesondere von bis zu 15,0 mm.

Weitere Merkmale, Vorteile und Einzelheiten der Erfindung werden nun anhand der Zeichnung, die schematisch ein Ausführungsbeispiel der Erfindung zeigt, näher beschrieben. Dabei zeigen

Fig. 1 eine Ansicht eines Profilblockes eines Laufstreifens eines Fahrzeugluftreifens mit einer Ausführungsvariante der Erfindung,

Fig. 2 einen Schnitt entlang der Linie II-II der Fig. 1 und

Fig. 3 eine Ansicht eines Spikes.

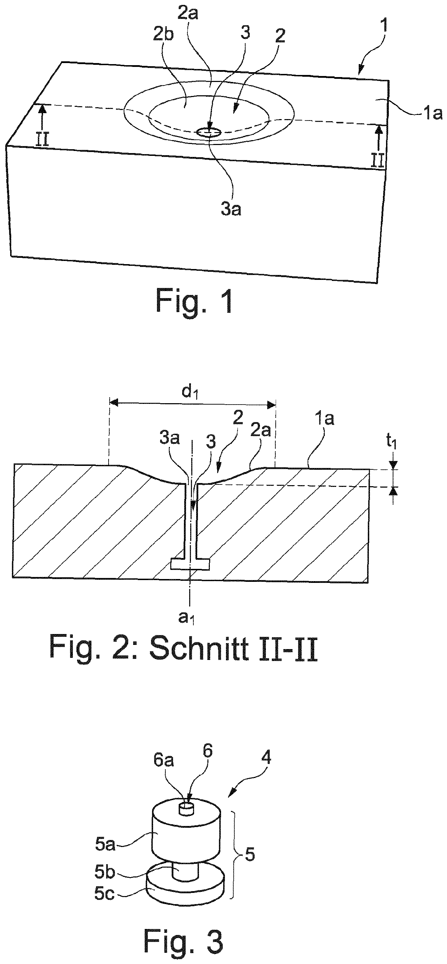

Fig. 1 zeigt ein Profilelement 1 eines Laufstreifens eines Fahrzeugluftreifens, welcher ein Spikereifen sowie insbesondere ein Reifen in Radialbauart für Personenkraftwagen, Vans oder Light-Trucks ist. Das dargestellte Profilelement 1 ist ein Profilblock, welcher von nicht gezeigten Rillen, beispielsweise Umfangs- und Querrillen, umlaufen und vorzugsweise mit nicht dargestellten Einschnitten versehen ist.

Das Profilelement 1 weist eine an der Laufstreifenperipherie liegende Außenfläche 1a auf, in welcher eine radial nach innen gewölbte, muldenförmige und in Draufsicht kreisförmige Vertiefung 2 ausgebildet ist. Die Vertiefung 2 weist einen kreisringförmig umlaufenden, gerundeten Randbereich 2a und einen innerhalb von diesem befindlichen, die Mulde bildenden Boden 2b auf. Der Randbereich 2a geht knickfrei in die Außenfläche 1a über, sodass auch die Vertiefung 2 knickfrei zur Außenfläche 1a ausläuft (Fig. 2). Der Boden 2b weist bei der gezeigten Ausführung die Form einer radial nach innen gewölbten Kugelkappe (krummer Teil der Oberfläche eines Kugelsegments) auf. Der Boden 2b und der gerundete Randbereich 2a sind daher, im Querschnitt betrachtet, entgegengesetzt zueinander gekrümmt (Fig. 2).

Die Vertiefung 2 weist in ihrem Zentrum ihre tiefste Stelle auf, von welcher ein in radialer Richtung ins Laufstreifeninnere verlaufendes, kreiszylindrisches Spikeloch 3 (Fig. 2) mit einem Endabschnitt größeren Durchmessers - angepasst an den Fußflansch des einzusetzenden Spikes - ausgeht. Das Spikeloch 3 weist daher eine im Zentrum der Vertiefung 2 liegende Austrittsöffnung 3a auf. Das Spikeloch 3 wird in bekannter Weise während der Vulkanisation des Reifens mittels eines Moldpins ausgeformt. Gleichzeitig wird dabei auch die Vertiefung 2 über an den entsprechenden Formteilen, beispielsweise Formsegmenten, vorgesehene flache Auswölbungen in den Laufstreifen eingeprägt. Das Spikeloch 3 und die Vertiefung 2 weisen eine gemeinsame, in radialer Richtung verlaufende Hauptachse $a_1$ auf, bezüglich welcher das Spikeloch 3 und die Vertiefung 2 rotationssymmetrisch ausgeführt sind (Fig. 2).

Die Vertiefung 2 weist an der Hauptachse $a_1$ eine in radialer Richtung zwischen der Außenfläche 1a und dem Niveau der Austrittsöffnung 3a des Spikeloches 3 ermittelte Tiefe $t_1$ von 0,5 mm bis 1,0 mm sowie einen an der Außenfläche 1a ermittelten, den gerundeten Randbereich 2a mitumfassenden Durchmesser $d_1$ von 11,0 mm bis 18,0 mm, insbesondere von höchstens 15,0 mm, auf.

Fig. 3 zeigt schematisch einen herkömmlichen Spike 4 aus einem Spikekörper 5 mit einem kreiszylindrischen Oberflansch 5a, einer Einschnürung 5b und einem Fußflansch 5c. Im Spikekörper 5 ist ein Spikepin 6 verankert, welcher einen aus dem Spikekörper 5 herausragenden Pinabschnitt 6a aufweist. Wie bekannt und üblich, ist das Volumen des Spikekörpers 5 wesentlich größer als jenes des Spikeloches 3, um eine Presspassung des Spikekörpers 5 und dadurch einen guten Sitz des Spikes 4 im Spikeloch 3 zu gewährleisten.

Wie nachfolgend erläutert wird, ist gemäß der Erfindung das Volumen $V_{Vertiefung}$ der Vertiefung 2 auf spezielle Weise auf das Volumen $V_{Spikekörper}$ des Spikekörpers 5 (ohne Pinabschnitt 6a) des jeweils in das Spikeloch 3 einzusetzenden Spikes 4 abgestimmt. Die erwähnten Volumina werden nachfolgend als Vertiefungsvolumen $V_{Vertiefung}$ und Spikekörpervolumen $V_{Spikekörper}$ bezeichnet.

Weist beispielsweise der in das Spikeloch 3 einzusetzende Spike 4 einen Spikekörper 5 mit einem Spikekörpervolumen $V_{Spikekörper}$ von 483 $mm^3$ auf, so lässt sich theoretisch ein exakter Volumenausgleich exemplarisch durch ein Spikeloch 2 mit einem Spikelochvolumen $V_{Spikeloch}$ von 257 $mm^3$ und einer Vertiefung 3 mit einem Vertiefungsvolumen $V_{Vertiefung}$ von 226 $mm^3$ erreichen.

Gemäß der Erfindung gilt:

$$V_{Vertiefung} = (V_{Spikekörper} - V_{Spikeloch}) * f$$

mit f: Faktor, wobei f = 0,9 bis 1,1, insbesondere 0,95 bis 1,05

Das Vertiefungsvolumen $V_{Vertiefung}$ ist daher derart gewählt, dass es 90% bis 110%, insbesondere 95% bis 105%, der Differenz zwischen dem Spikekörpervolumen $V_{Spikekörper}$ und dem Spikelochvolumen $V_{Spikeloch}$ beträgt.

Die Erfindung ist auf das beschriebene Ausführungsbeispiel nicht beschränkt.

Insbesondere kann die Vertiefung eine von der beschriebenen Gestalt abweichende Gestalt aufweisen. Beispielsweise kann die Vertiefung, in Draufsicht betrachtet, oval oder elliptisch ausgeführt sein.

**Bezugseichenliste**

| | |
|---|---|
| 1 | Profilelement |
| 1a | Außenfläche |
| 2 | Vertiefung |
| 2a | Randbereich |
| 2b | Boden |
| 3 | Spikeloch |
| 3a | Austrittsöffnung |
| 4 | Spike |
| 5 | Spikekörper |
| 5a | Oberflansch |
| 5b | Einschnürung |
| 5c | Fußflansch |
| 6 | Spikepin |
| 6a | Pinabschnitt |
| $a_1$ | Hauptachse |
| $d_1$ | Durchmesser |
| $t_1$ | Tiefe |

**Patentansprüche**

1. Kombination aus einem Fahrzeugluftreifen und Spikes (4), wobei der Fahrzeugluftreifen einen Laufstreifen mit Profilelementen (1) mit jeweils zumindest einem Spikeloch (3) mit einem Spikelochvolumen $V_{Spikeloch}$ zum Einsetzen eines Spikes (4) mit einem Spikekörper (5) mit einem Spikekörpervolumen $V_{Spikekörper}$ aufweist, wobei das Spikekörpervolumen $V_{Spikekörper}$ größer ist als das Spikelochvolumen $V_{Spikeloch}$, wobei das Spikeloch (3) vom Zentrum einer an der Außenfläche (1a) des Profilelementes (1) ausgebildeten, muldenförmigen Vertiefung (2) ausgeht,

   **dadurch gekennzeichnet,**
   **dass** die muldenförmige Vertiefung (2) knickfrei zur Außenfläche (1a) ausläuft und ein Vertiefungsvolumen $V_{Vertiefung}$ aufweist, für welches gilt:

   $$V_{Vertiefung} = (V_{Spikekörper} - V_{Spikeloch}) * f,$$

   mit f: Faktor, wobei f = 0,9 bis 1,1 ist.

2. Kombination nach Anspruch 1, **dadurch gekennzeichnet,**
   **dass** der Faktor f 0,95 bis 1,05 beträgt.

3. Kombination nach Anspruch 1 oder 2,
   **dadurch gekennzeichnet,**
   **dass** das Spikeloch (3) und die Vertiefung (2) bezüglicher einer gemeinsamen, in radialer Richtung verlaufenden Hauptachse ($a_1$) rotationssymmetrisch ausgeführt sind.

4. Kombination nach einem der Ansprüche 1 bis 3,
   **dadurch gekennzeichnet,**
   **dass** die Vertiefung (2) in Draufsicht kreisförmig ausgeführt ist.

5. Kombination nach einem der Ansprüche 1 bis 4,
**dadurch gekennzeichnet,**
**dass** die Vertiefung (2) einen umlaufenden, gerundeten Randbereich (2a) und einen innerhalb des Randbereiches befindlichen, die Mulde bildenden Boden (2b) aufweist.

6. Kombination nach Anspruch 5,
**dadurch gekennzeichnet,**
**dass** die Vertiefung (2) von einem kreisringförmigen Randbereich (2a) umlaufen ist.

7. Kombination nach Anspruch 5 oder 6,
**dadurch gekennzeichnet,**
**dass** der Boden (2b) die Form einer Kugelkappe aufweist.

8. Kombination nach einem der Ansprüche 1 bis 7,
**dadurch gekennzeichnet,**
**dass** die Vertiefung (2) an ihrer tiefsten Stelle eine zwischen der Laufstreifenperipherie und dem Spikeloch (2) ermittelte Tiefe ($t_1$) von 0,5 mm bis 1,0 mm aufweist.

9. Kombination nach einem der Ansprüche 1 bis 8,
**dadurch gekennzeichnet,**
**dass** die Vertiefung (2) an der Laufstreifenperipherie einen größten Durchmesser ($d_1$) von 11,0 mm bis 18,0 mm, insbesondere von höchstens 15,0 mm, aufweist.

## Claims

1. Combination consisting of a pneumatic vehicle tyre and spikes (4), the pneumatic vehicle tyre having a tread strip with profile elements (1) with in each case at least one spike hole (3) with a spike hole volume $V_{Spikehole}$ for the insertion of a spike (4) with a spike body (5) with a spike body volume $V_{Spikebody}$, the spike body volume $V_{Spikebody}$ being greater than the spike hole volume $V_{Spikehole}$, the spike hole (3) emanating from the centre of a recess-shaped depression (2) which is configured on the outer face (1a) of the profile element (1), **characterized in that** the recess-shaped depression (2) tapers without kinks to the outer face (1a) and has a depression volume $V_{depression}$, for which the following applies: $V_{depression} = (V_{Spikebody} - V_{Spikehole}) * f$, where f is a factor, wherein f = from 0.9 to 1.1.

2. Combination according to Claim 1, **characterized in that** the factor f is from 0.95 to 1.05.

3. Combination according to Claim 1 or 2, **characterized in that** the spike hole (3) and the depression (2) are of rotationally symmetrical configuration with regard to a common main axis ($a_1$) which runs in the radial direction.

4. Combination according to one of Claims 1 to 3, **characterized in that** the depression (2) is of circular configuration in plan view.

5. Combination according to one of Claims 1 to 4, **characterized in that** the depression (2) has a peripheral, rounded edge region (2a) and a bottom (2b) which is situated within the edge region and forms the recess.

6. Combination according to Claim 5, **characterized in that** the depression (2) is run around by a circularly annular edge region (2a).

7. Combination according to Claim 5 or 6, **characterized in that** the bottom (2b) has the shape of a spherical cap.

8. Combination according to one of Claims 1 to 7, **characterized in that**, at its deepest point, the depression (2) has a depth ($t_1$) determined between the tread strip periphery and the spike hole (2) of from 0.5 mm to 1.0 mm.

9. Combination according to one of Claims 1 to 8, **characterized in that** the depression (2) on the tread strip periphery has a greatest diameter ($d_1$) of from 11.0 mm to 18.0 mm, in particular of at most 15.0 mm.

## Revendications

1. Combinaison d'un pneumatique de véhicule et de crampons (4), le pneumatique de véhicule présentant une bande de roulement avec des éléments profilés (1) ayant chacun au moins un trou de crampon (3) ayant un volume de trou de crampon $V_{trou\ de\ crampon}$ pour l'insertion d'un crampon (4) ayant un corps de crampon (5) ayant un volume de corps de crampon $V_{corps\ de\ crampon}$, le volume de corps de crampon $V_{corps\ de\ crampon}$ étant plus grand que le volume de trou de crampon $V_{trou\ de\ crampon}$, le trou de crampon (3) partant du centre d'un creux (2) en forme de cuvette formé sur la surface extérieure (1a) de l'élément profilé (1), **caractérisée en ce que**

   le creux (2) en forme de cuvette se termine sans coude vers la surface extérieure (1a) et présente un volume de creux $V_{creux}$, pour lequel on a :

$$V_{creux} = (V_{corps\ de\ crampon} - V_{trou\ de\ crampon}) * f$$

   avec f : facteur, où f = 0,9 à 1,1.

2. Combinaison selon la revendication 1, **caractérisée en ce que** le facteur f est de 0,95 à 1,05.

3. Combinaison selon la revendication 1 ou 2, **caractérisée en ce que** le trou de crampon (3) et le creux (2) sont réalisés à symétrie de rotation par rapport à un axe principal ($a_1$) commun s'étendant dans la direction radiale.

4. Combinaison selon l'une quelconque des revendications 1 à 3, **caractérisée en ce que** le creux (2) est réalisé sous forme circulaire en vue de dessus.

5. Combinaison selon l'une quelconque des revendications 1 à 4, **caractérisée en ce que** le creux (2) présente une zone de bord arrondie circonférentielle (2a) et un fond (2b) formant la cuvette, qui se trouve à l'intérieur de la zone de bord.

6. Combinaison selon la revendication 5, **caractérisée en ce que** le creux (2) est entouré d'une zone de bord (2a) en forme d'anneau de cercle.

7. Combinaison selon la revendication 5 ou 6, **caractérisée en ce que** le fond (2b) présente la forme d'une calotte sphérique.

8. Combinaison selon l'une quelconque des revendications 1 à 7, **caractérisée en ce que** le creux (2) présente à son point le plus profond une profondeur ($t_1$) déterminée entre la périphérie de la bande de roulement et le trou de crampon (2) de 0,5 mm à 1,0 mm.

9. Combinaison selon l'une quelconque des revendications 1 à 8, **caractérisée en ce que** le creux (2) présente au niveau de la périphérie de la bande de roulement un diamètre maximal ($d_1$) de 11,0 mm à 18,0 mm, notamment d'au plus 15,0 mm.

2a
2b
3
2
1
1a
II
II
3a

Fig. 1

d1
2
1a
3a
3
2a
t1
a1

Fig. 2: Schnitt II-II

6a
6
4
5a
5
5b
5c

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 3363657 A1
- DE 2305558 A1
- DE 102017207316 A1